**Europäisches Patentamt**

**European Patent Office**

**Office européen des brevets**

(19)

(11) Publication number : **0 234 060 B2**

(12) # NEW EUROPEAN PATENT SPECIFICATION

(45) Date of publication of the new patent specification : **02.06.93 Bulletin 93/22**

(51) Int. Cl.⁵ : **C08L 71/12**, **C08L 77/00**, **C08K 5/10**

(21) Application number : **86202276.1**

(22) Date of filing : **16.12.86**

---

(54) **Polymer mixture comprising polyphenylene ether and polyamide.**

---

(30) Priority : **27.01.86 NL 8600167**

(43) Date of publication of application :
**02.09.87 Bulletin 87/36**

(45) Publication of the grant of the patent :
**30.05.90 Bulletin 90/22**

(45) Mention of the opposition decision :
**02.06.93 Bulletin 93/22**

(84) Designated Contracting States :
**DE FR GB IT NL**

(56) References cited :
**EP-A- 0 135 093**
**WO-A-85/05372**
**DE-A- 3 114 915**
**US-A- 4 444 934**
**Ullmann's Enzyklopädie der Technischen**
**Chemie, 4. Auflage, S. 570, 571, 582;**

(73) Proprietor : **GENERAL ELECTRIC COMPANY**
**1 River Road**
**Schenectady New York 12305 (US)**

(72) Inventor : **Van der Meer, Roelof**
**General Electric Plastics B.V. P.O. Box 117**
**NL-4600 AC Bergen op Zoom (NL)**
Inventor : **Avakian, Roger W.**
**General Electric Plastics B.V. P.O. Box 117**
**NL-4600 AC Bergen op Zoom (NL)**

(74) Representative : **Pratt, Richard Wilson et al**
**London Patent Operation G.E. Technical**
**Services Co. Inc. Essex House 12/13 Essex**
**Street**
**London WC2R 3AA (GB)**

EP 0 234 060 B2

## Description

The invention relates to a polymer mixture which comprises a polyphenylene ether, a polyamide and an agent to improve the impact strength, with a ratio by weight between the polyphenylene ether and the polyamide of between 1:19 and 3:1.

Polymer mixtures which comprise a polyphenylene ether and a polyamide are known per se. For this purpose, reference may be made, for example, to EP-A 0 024 120; EP-A 0 046 040 and EP-A 0 147 874.

The above mentioned polymer mixtures may comprise, in addition to a polyphenylene ether and a polyamide, an agent to improve the impact strength. Mentioned are the generally used agents to improve the impact strength of polyamides or polyphenylene ethers.

The above mentioned known polymer mixtures are generally used to manufacture therefrom articles in a heated, plastic condition, for example, by injection moulding. In the injection moulding process the polymer mixtures are heated in the injection moulding machine. The polymer mixtures then stay in the injection moulding machine for some lime before they are injection moulded. The disadvantage of the known polymer mixtures is that the impact strength of the articles formed therefrom by injection moulding is influenced when the temperature in the injection moulding machine is high and/or the residence in the injection moulding machine is long. In some cases this cannot be avoided.

The invention is based on the discovery that, by the addition of an auxiliary agent, a polymer mixture can be obtained which does not exhibit the disadvantage mentioned hereinbefore or exhibits this to a smaller extent, while the remaining properties of the polymer mixture remain substantially unchanged.

The polymer mixture according to the invention is characterized in that the polymer mixture comprises an ester without free hydroxyl groups of one or more three-fold to six-fold alcohols and one or more saturated aliphatic $C_5$-$C_{34}$ mono- or dicarboxylic acids in quantity of 0.01-5% by weight of the ester calculated with respect to the sum of the quantities by weight of polyphenylene ether and polyamide.

US-A 4 444 934 described thermoplastic resins comprising an aromatic polyether resin or a mixed resin of an aromatic polyether resin with a styrene resin, in which other polymers eg polyethylene, polypropylene, polyamide, polyester etc. may be incorporated in an amount not to damage the characteristics such as mechanical porperties. Preferred amount of these resins is 20% by weight or less. To said resins is added a fatty acid ester of polyhydric alcohol which has at least one hydroxyl group. The ester serves to improve the melt flow index. In the polymer mixtures according to the invention no improvement in the melt viscosity has been observed. The ester is used in a quantity of from 0.01-5% by weight, preferably from 0.1-2.5% by weight (calculated with respect to the sum of the quantities by weight of polyphenylene ether and polyamide). When less than 0.01% by weight is used, the abovedescribed effect does not occur. No further improvement of the effect occurs when quantities of more than 5% by weight are used.

The ester preferably used is the tetrastearate of pentaerythritol.

The polymer mixture according to the invention comprises, in addition to the ester, one or more further agents to improve the impact strength, preferably a vinylaromatic polydiene di- or triblock copolymer, the block copolymer being not hydrogenated or being partially hydrogenated.

The polymer mixture according to the invention preferably also comprises an agent to improve the compatibility of the polyphenylene ether and the polyamide.

As an agent to improve the compatibility is preferably used malic acid, citric acid, maleic acid, fumaric acid or derivatives thereof.

In addition to the above-mentioned constituents, the polymer mixture according to the invention may comprise one or more of the following constituents: fillers, reinforcing fibres, agents to improve the flame resistance, stabilizers, dyes and/or pigments. As stabilizers may be used the stabilizers known generally for polyamides.

The polymer mixtures according to the invention comprise one or more compounds selected from the following groups of compounds:

A   polyphenylene ether
B   polyamides
C   agents to improve the impact strength
D   esters without free hydroxyl groups of one or more three-fold to six-fold alcohols and one or more saturated aliphatic $C_5$-$C_{34}$ mono- or dicarboxylic acids.

## A. Polyphenylene ethers

Polyphenylene ethers are compounds which are known per se. For this purpose reference may be made to the US-A 3 306 874; 3 306 875; 3 257 357 and 3 257 358. Polyphenylene ethers are usually prepared by an oxidative coupling reaction - in the presence of a copper amine complex - of one or more two-fold or three-fold substituted phenols, homopolymers and copolymers, respectively, being obtained. Copper amine complexes derived from primary, secondary and/or tertiary amines may be used. Examples of suitable polyphenylene ethers are:

poly(2,3-dimethyl-6-ethylphenylene-1,4-ether)
poly(2,3,6-trimethylphenylene-1,4-ether)
poly[2-(4'-methylphenyl)phenylene-1,4-ether]
poly(2-bromo-6-phenylphenylene-1,4-ether)
poly(2-methyl-6-phenylphenylene-1,4-ether)
poly(2-phenylphenylene-1,4-ether)
poly(2-chlorophenylene-1,4-ether)
poly(2-methylphenylene-1,4-ether)
poly(2-chloro-6-ethylphenylene-1,4-ether)
poly(2-chloro-6-bromophenylene-1,4-ether)
poly(2,6-di-n-propylphenylene-1,4-ether)
poly(2-methyl-6-isopropylphenylene-1,4-ether)
poly(2-chloro-6-methylphenylene-1,4-ether)
poly(2-methyl-6-ethylphenylene-1,4-ether)
poly(2,6-dibromophenylene-1,4-ether)
poly(2,6-dichlorophenylene-1,4-ether)
poly(2,6-diethylphenylene-1,4-ether)
poly(2,6-dimethylphenylene-1,4-ether)

Copolymers, for example, copolymers derived from two or more phenols as used in the preparation of the above-mentioned homopolymers, are also suitable. Furthermore suitable are graft copolymers and block copolymers of vinylaromatic compounds, for example, polystrene, and of polyphenylene ether as described hereinbefore.

## B. Polyamides

Polyamides are used in the polymer mixtures according to the invention. All thermoplastic polyamides known per se may be used in the polymer mixtures according to the invention. Suitable polyamides are, for example, polyamide-4; polyamide-6; polyamide-4,6; polyamide-6,6; polyamide-3,4; polyamide-12; polyamide-11; polyamide-6,10; polyamides prepared from terephthalic acid and 4,4'-diaminodicyclohexyl methane, polyamides prepared from azelainic acid, adipic acid and 2,2-bis-(p-aminocyclohexyl)propane, polyamides prepared from adipic acid and metaxylylene diamine, polyamides from terephthalic acid and trimethyl hexamethylene diamine.

## C. Agents to improve the impact strength

Agents to improve the impact strength are known per se. For this purpose reference may be made to the literature. In principle any known agent to improve the impact strength of thermoplasts is suitable. In particular, an agent selected from one or more of the following groups of compounds may be mentioned:

- Ethylene-propylene copolymers or ethylene-propylene non-conjugated diene terpolymers and all the other known compounds of this type, for example, described in US-A 2,933,480; 3,000,866, 3,093,621; 3,379,701 and 3,407,158. These copolymers and terpolymers are usually referred to as EPM and EPDM.
- Ethylene-propylene copolymers or ethylene-propylene-non-conjugated diene terpolymers on which a functional group has been grafted. Examples of functional groups are carboxylic acid groups or derivatives thereof. This type of agent to improve the impact strength is described, for example, in US-A 3,884,882; 4,174,358; 4,251,644; 4,346,194 and 4,448,934. It is also possible to use epoxy groups as functional groups, for example, by grafting the copolymer or terpolymer with glycidylmethacrylate.
- Alkylene-alkyl(meth)acrylate copolymers having an alkylene group with 2-6 carbon atoms and having an alkyl group with 1-8 carbon atoms. These compounds are disclosed, for example, in US-A 3,700,751 and 3,845,163. This type of polymers is prepared by copolymerising an olefin, for example, ethylene, propylene, with one or more of the following monomers: a $C_1$-$C_8$ alkyl acrylate, for example, methyl acrylate, ethyl acrylate, hexyl acrylate, and the like, a $C_1$-$C_8$ alkyl methacrylate, for example, methyl methacrylate, ethyl methacrylate, hexyl methacrylate and the like; acrylic acid or methacrylic acid. The known copolymers of ethylene with an alkyl ester of acrylic acid are to be preferred. In general, the acrylate content or methacrylate content of the copolymer may be approximately 10 to approximately 30% be weight. The olefin content of the copolymer may be approximately 70 to approximately 90% by weight. An example of the last-mentioned copolymers is an ethylene-ethylacrylate copolymer having a weight ratio of ethylene to ethylacrylate of approximately 4.5 to 1.

- Alkylene-alkyl(meth)acrylate polymers with a functional group, which functional group has been introduced, for example, by a polymerisation reaction while forming a terpolymer or by a grafting reaction. The functional group has been selected from carboxylic acid groups, acid anhydride groups, acid amide groups, imido groups, carboxylic acid ester groups, amino groups, hydroxyl groups or epoxy groups. The alkylene group of the alkylene alkyl(meth) acrylate comprises 2-6 carbon atoms and the alkyl group thereof comprises 1-8 carbon atoms. This type of agents to improve the impact strength is described, for example, in US-A 4,436,872; 4,478,978. Particularly suitable are ethylene-ethylacrylate-maleic acid polymers and ethylene-ethylacrylate-fumaric acid polymers. This type of polymers can also be obtained by complete or partial saponification of the above-mentioned non-functionalised alkylene-alkyl-(meth)acrylate copolymers. For this perpose reference may be made to US-A 4,485,214.

- Core-shell polymers having a rubber-like core and one or more shells. For this purpose, reference may be made, for example, to US-A 3,808,180; 4,096,202; 4,180,494; 4,306,040; 4,375,532 and 4,495,324. Core-shell polymers generally comprise a rubber-like core, for example, mainly built up from a diene rubber, for example, polybutadiene rubber, or mainly from an acrylate rubber, for example, butylacrylate. The rubber of the core may moreover comprise one or more comonomers. The core may be cross-linked by carrying out the preparation of the core in the presence of cross-linking agents. As cross-linking agents may be used bifunctional compounds. One or more shells have been provided on the core, of which generally at least one is built up from a stiff, i.e. non-rubber-like, polymer or copolymer. The shell or shells is or are generally built up from one or more of the following monomers: alkylmethacrylates, alkylacrylates, acrylonitrile, vinylaromatic compounds, for example, styrene or substituted styrene compounds, for example, alpha-methylstyrene or halogenated styrene compounds. The shell may be "bonded" to the shell via graft linking agents which may be present in the core. The preparation of core-shell polymers is generally known. For this purpose, reference may be made, for example, to the United States Patent Specifications mentioned hereinbefore.

- Core-shell polymers having a rubber-like core and one or more shells (core-shell polymer), the outermost shell of which comprises one or more functional groups selected from carboxylic acid groups, acid anhydride groups, acid amide groups, imido groups, carboxylic acid ester groups, amino groups, epoxy groups or hydroxyl groups. Such core-shell polymers are described, for example in US-A 3,668,274; 4,034,013; 4,474,927. This type of core-shell copolymers is generally prepared by incorporating in the (outermost) shell - by a polymerisation reaction - a comonomer which comprises a double or threefold unsaturated bond and one or more of the above-mentioned functional groups. Examples of these core-shell polymers are polymers having a core from butylacrylate rubber and a shell from styrene or styrene acrylonitrile with 0.1-10% by weight of maleic acid anhydride.

Also suitable are the generally known agents to improve the impact strength of polyphenylene ethers. Any agent known per se may be used in the polymer mixtures according to the invention. For this purpose reference may be made, for example, to US-A 4,113,800; 4,383,082; 3,994,856; 4,113,797; 4,191,685; 4,373,055; 4,234,701; 3,833,688; 4,478,979. More particularly may be mentioned by name vinylaromatic-polydiene di- or triblock copolymers, in which the block copolymer is not hydrogenated or is partially hydrogenated. Mentioned by name are partially hydrogenated or non-hydrogenated linear styrene-butadiene-styrene triblock copolymers and partially hydrogenated or non-partially hydrogenated radial styrene-butadiene block copolymers. Some types of polybutadiene are also suitable.

It is, of course, possible to use a combination of one or more of the above-mentioned agents to improve the impact strength.

## D. Esters

The polymer mixtures according to the invention comprise at least one ester without free hydroxyl groups of one or more three-fold to six-fold alcohols and one or more saturated aliphatic $C_5$-$C_{34}$ mono- or dicarboxylic acids. Examples of suitable esters are the reaction products of one or more three-fold to six-fold alcohols, for example, glycerin, trimethylol propane, hexanetriol, erythrol, arabitol, adonitol, mannitol, dulcitol in particular mesoerythritol, xylitol, sorbitol, pentaerythritol with one or more saturated aliphatic mono- or dicarboxylic acids having 5-34 carbon atoms, for example, capric acid, undecanic acid, lauric acid, tridecanic acid, stearic acid, valerianic acid, adipic acid, azealic acid, capronic acid, palmitic acid, glutaric acid. Examples of suitable esters are the full esterification products of pentaerythritol with stearic acid or of stearic acid and neopentylene glycol. Pentaerythrityl tetrastearate is preferably used.

4

In addition to the above-mentioned constituents, the polymer mixtures according to the invention may comprise an agent to improve the compatibility of the polyphenylene ether and the polyamide. These are to be understood to be agents which facilitate the mixing of two non-miscible polymers and also improve the bonding between the phases in such systems (see Chapter I of "Polymer-Polymer miscibility" Academic Press, 1979). In practice this means that the said agents suppress the tendency to delamination of two-phase polymer mixtures.

The relative qualities of weight between the polyphenylene ethers and the polyamides can be varied within broad ranges i.e. between 1:19 and 3:1. More preferred said range lies between 1:10 and 2:1. Most preferred the relative quantities of weight between the polyphenylene ether and the polyamides are so chosen that the polyamide forms the continuous phase wherein particles of the polyphenylene ether are embedded.

The agents to improve the impact strength are preferably used in a quantity between 1 and 150, more preferably between 1 and 50 parts by weight per 100 parts by weight of the sum of the quantities by weight of polyphenylene ether and polyamide.

As an agent to improve the compatibility, the polymer mixtures according to the invention may comprise one or more compounds selected from the following groups;

A) liquid diene polymers or epoxy compounds or compounds having in their molecular structure a two-fold or three-hold carbon-to-carbon bond and comprise a carboxylic acid, acid anhydride, acid amide, imido, carboxylic acid ester, amino or hydroxyl group, in a quantity of from 0.01 to 30 parts by weight per 100 parts by weight of polyamide plus polyphenylene ether,

B) aliphatic polycarboxylic acids or derivatives thereof of the general formula: $(R_1O)_m R(COOR_2)_n (CONR_3R_4)_s$, wherein R is a saturated hydrocarbon group having 2 to 20 carbon atoms with a linear or branched chain; $R_1$ is a hydrogen atom or an alkyl group, an aryl group, an acyl group or a carbonyldioxy group having 1 to 10 carbon atoms; each $R_2$ independently of each other is a hydrogen atom or an alkyl group or an aryl group having 1 to 20 carbon atoms; each $R_3$ and $R_4$ independently of each other is a hydrogen atom or an alkyl group or an aryl group having 1 to 10 carbon atoms; M is equal to 1 and (n+s) is larger than or equal to 2 and $\underline{n}$ and $\underline{s}$ each are larger than or equal to zero; and wherein $(OR_1)$ is in an alpha or beta position with respect to a carbonyl group and in which at least two carbonyl groups are separated by 2 to 6 carbon atoms, in a quantity of 0.05 to 5 parts by weight per 100 parts by weight of polyamide plus polyphenylene ether,

C) a silane compound having in its molecular structure both (a) at least one silicon atom which is bonded to a carbon atom $\underline{via}$ an oxygen bridge and (b) at least one ethenic carbon-to-carbon double bond or a carbon-to-carbon three-fold bond and/or comprises a functional group selected from an amine group and a mercapto group, in which the functional group is not bonded directly to the silicon atom, in a quantity of from 0.05 to 4 parts by weight of polyamide plus polyphenylene ether,

D) a functionalised polyphenylene ether consisting of (a) a polyphenylene ether and (b) a compound of the general formula (i)-Z-(ii), in which (i) is at least a group of the formula [X-C(O)] with X = F, Cl, Br, I, OH, -OR, or -O-C(O)-R with R = H, alkyl or aryl, in which (ii) is at least a carboxylic acid, acid anhydride, acid amide, imido, carboxylic acid ester, amino or hydroxyl group, and in which the groups (i) and (ii) are bonded together covalently $\underline{via}$ a bridge Z, Z being a bivalent hydrocarbon radical.

E) an oxidized polyolefin wax, optionally in combination with an organic phosphite, in a quantity of from 0.01 to 10 parts by weight per 100 parts by weight of polyamide plus polyphenylene ether,

F) a copolymer with units of a vinylaromatic compound and of an alpha-beta unsaturated dicarboxylic acid or dicarboxylic acid anhydride or a copolymer with units of a vinylaromatic compound and of an imide compound of an alpha-beta unsaturated dicarboxylic acid, in a quantity of from 0.5 to 100 parts by weight per 100 parts by weight of polyamide plus polyphenylene ether,

G) the reaction product of a) a 1,2-substituted olefinic compound with carboxyl group or acid anhydride group, b) a polyphenylene ether and c) a radical initiator, in a quantity of from 0.5-150 parts by weight per 100 parts by weight of polyamide plus polyphenylene ether.

The agents to improve the compatibility mentioned sub D) and G) can replace the polyphenylene ether in the polymer mixture according to the invention entirely or partly.

The agents mentioned hereinbefore sub A) to G) to improve the compatibility are known in part from the above-mentioned European Patent Applications.

The invention will be described in more detail with reference to the ensuing specific example:

## Example I and comparative example A

Two different polymer mixtures were prepared from 49 parts by weight of poly(2,6-dimethylphenylene-1,4-ether) having an intrinsic viscosity of approximately 49 ml/g measured at 25°C in chloroform, 41 parts by weight of predried polyamide-6,6 (having a number-averaged molecular weight $\overline{Mn}$ of 20,000 and a viscosity index measured according to ISO R 307 - 0.5 g of polyamide dissolved in 100 g of 90% formic acid at 25°C - of 135 ml/g), 10 parts by weight of non-hydrogenated styrene-butadiene-styrene triblock copolymer, 0.7 parts by weight of citric acid-1-hydrate, 0.4 parts by weight of stabilizers and 0.5 parts by weight of $TiO_2$ (comparative example A) and 0.3 parts by weight of pentaerythrityltetrastearate (example I according to the invention).

The polymer mixtures were thoroughly mixed and extruded in a Werner Pfleiderer extruder at an average temperature of 285°C at 300 r.p.m. All the above-mentioned constituents, with the exception of 31 parts by weight of the 41 parts by weight of polyamide-6,6, were fed into the rear side of the extruder. The said 31 ports by weight of polyamide-6,6 were fed into the extruder approximately half-way. The resulting extrudate was chopped to pieces.

From the resulting polymer mixtures test rods were injection moulded according to ASTM D 256 for measuring the impact strength according to Izod(with notch). Moreover, a "falling dart impact" was measured at injection-moulded disks having a thickness of 3.2 mm and a diameter of 100 mm. In this test a standardized test body having a hemispherical tip and a weight of 100 N is dropped on the disk from a height of 2.2 m, the disk being supported by an annular support having a diameter of 95 mm. The consumed energy to fracture was measured. The energy value thus found is referred to as "falling dart impact" (DIN 53443).

The injection moulding machine was adjusted at 290°C; the temperature of the emanating polymer mixture was 310°C. A number of different cycle times were used in the injection moulding process. This resulted in different residence times of the polymer mixtures in the injection moulding machine. Residence times varying between 2 and 10 minutes were used.

The impact strength according to Izod and the "falling dart impact" of the resulting samples were measured as indicated above. The results are recorded in the table hereinafter.

The melt index of the resulting polymer mixtures has been determined at 280°C for different shear rates: no relevant differences were found.

Table

| Polymer mixture according to | Example I | Comparative Example A |
|---|---|---|
| Impact strength according to Izod (J/m) after a residence time of x minutes | | |
| x = 2 | 215 | 257 |
| x = 4 | 225 | 257 |
| x = 6 | 220 | 230 |
| x = 8 | 221 | 215 |
| x = 10 | 217 | 185 |
| Falling dart impact (J) after a residence time of x minutes | | |
| x = 2 | 200 | 215 |
| x = 4 | 210 | 217 |
| x = 6 | 212 | 170 |
| x = 8 | 215 | 190 |
| x = 10 | 195 | 150 |
| Melt viscosity (Pa . s) at 280°C at shear rate (per second) | | |
| 115 | 998 | 1013 |
| 230 | 775 | 773 |
| 574 | 513 | 525 |
| 1148 | 385 | 383 |
| 1500 | 335 | 343 |
| 2296 | 270 | 273 |

The initial values of the Izod impact strength and of the falling dart impact are higher for the comparative example A than they are for Example I. Nevertheless, the corresponding values of example I after a residence time of 8-10 minutes are significantly better than those of comparative Example A. From this it appears that the addition of an ester such as pentaerythrityl tetrastearate results in polymer mixtures the impact strength of which is maintained also after longer residence times at comparatively high temperatures in the injection moulding machine. This is of great practical importance.

## Claims

1. A polymer mixture which comprises a polyphenylene ether, a polyamide and an agent to improve the impact strength with a ratio by weight between the polyphenylene ether and the polyamide of between 1:19 and 3:1, characterized in that the polymer mixture comprises an ester without free hydroxyl groups one or more three-fold to six-fold alcohols and one or more saturated aliphatic $C_5$-$C_{34}$ mono- or dicarboxylic acids, in a quality of 0.01-5% by weight of the ester calculated with respect to the sum of the quantities by weight of polyphenylene ether polyamide.

2. A polymer mixture as claimed in claim 1, characterized in that the polymer mixture comprises pentaerythrityl tetrastearate as the ester.

3. A polymer mixture as claimed in claims 1-2, characterized in that the polymer mixture comprises a vinylaromatic polydiene di- or triblock copolymer as an agent to improve the impact strength, the block copolymer being not hydrogenated or being partially hydrogenated.

4. A polymer mixture as claimed in claims 1-3, characterized in that the mixture comprises an agent to improve the compatibility of the polyphenylene ether and the polyamide.

5. A polymer mixture as claimed in claim 4, characterized in that the polymer mixture comprises; functionalized polyphenylene ether, malic acid, citric acid, maleic acid anhydride, fumaric acid or derivatives thereof as an agent to improve the compatibility.

6. A polymer mixture as claimed in claims 1-5, characterized in that the polymer mixture comprises one or more of the following constituents: fillers, reinforcing fibres, agents to improve the flame resistance, stabilizers, dyes and/or pigments.

## Patentansprüche

1. Polymermischung, die enthält: einen Polyphenylenäther, ein Polyamid und ein Mittel zur Verbesserung der Schlagfestigkeit mit einem Gewichtsverhältnis zwischen dem Polyphenylenäther und dem Polyamid zwischen 1:19 und 3:1, gekennzeichnet dadurch, daß die Polymermischung einen Ester ohne freie Hydroxylgruppen aus einem oder mehreren drei- bis sechswertigen Alkoholen und einem oder mehreren gesättigten aliphatischen $C_5$-$C_{34}$ Mono- oder Dicarbonsäuren in einer Menge von 0,01 - 5 Gew.-% des Esters, berechnet auf die Summe der Gewichtsmengen des Polyphenylenäther-polyamids, enthält.

2. Polymermischung nach Anspruch 1, dadurch gekennzeichnet, daß die Polymermischung als Ester Pentaerythrithyltetrastearat enthält.

3. Polymermischung nach den Ansprüchen 1 bis 2, dadurch gekennzeichnet, daß die Polymermischung ein vinylaromatisches Polydien-di- oder -triblockcopolymer als Mittel zur Verbesserung der Schlagfestigkeit enthält, wobei das Blockcopolymer nicht hydriert oder teilweise hydriert ist.

4. Polymermischung nach den Ansprüchen 1 bis 3, dadurch gekennzeichnet, daß die Mischung ein Mittel zur Verbesserung der Verträglichkeit des Polyphenylenäthers und des Polyamids enthält.

5. Polymermischung nach Anspruch 4, dadurch gekennzeichnet, daß die Polymermischung als Mittel zur Verbesserung der Verträglichkeit enthält: funktionalisierten Polyphenylenäther, Äpfelsäure, Zitronensäure, Maleinsäureanhydrid, Fumarsäure oder Derivate derselben

6. Polymermischung nach den Ansprüchen 1 bis 5, dadurch gekennzeichnet, daß die Polymermischung einen oder mehrere der folgenden Bestandteile enthält: Füllstoffe, verstärkende Fasern, Mittel zur Verbesserung der Flammbeständiogkeit, Stabilisatoren, Farbstoffe und/oder Pigmente.

## Revendications

1. Composition de polymères qui comprend un poly(éther de phénylène), un polyamide et un agent pour améliorer la résistance au choc, avec un rapport en poids entre le poly(éther de phénylène) et le polyamide situé entre 1/19 et 3/1, la composition de polymères étant caractérisée en ce qu'elle comprend un ester, ne comportant pas de groupes hydroxy libres, d'un ou plusieurs alcools trifonctionnels à hexafonctionnels et d'un ou plusieurs acides aliphatiques saturés monocarboxyliques ou dicarboxyliques en $C_5$-$C_{34}$, en une proportion de 0,01 à 5 % en poids de l'ester, calculée relativement à la somme des quantités en poids de poly(éther de phénylène) et de polyamide.

2. Composition de polymères selon la revendication 1, caractérisée en ce qu'elle comprend du tétrastéarate de pentaérythrityle comme ester.

3. Composition de polymères selon la revendication 1 ou 2, caractérisée en ce qu'elle comprend un copolymère diséquencé ou triséquencé de composé vinyl-aromatique-polydiène comme agent pour améliorer la résistance au choc, le copolymère séquencé n'étant pas hydrogéné ou étant partiellement hydrogéné.

4. Composition de polymères selon l'une quelconque des revendications 1 à 3, caractérisée en ce qu'elle comprend un agent pour améliorer la compatibilité du poly(éther de phénylène) et du polyamide.

5. Composition de polymères selon la revendication 4, caractérisée en ce qu'elle comprend un poly(éther de phénylène) fonctionnalisé, de l'acide maléique, de l'acide citrique, de l'anhydride maléique, de l'acide fumarique ou leurs dérivés comme agent pour améliorer la compatibilité.

6. Composition de polymères selon l'une quelconque des revendications 1 à 5, caractérisée en ce qu'elle comprend un ou plusieurs des constituants suivants : des charges, des fibres de renfort, des agents ignifugeants, des stabilisants, des colorants et/ou des pigments.